Europäisches Patentamt

**European Patent Office**

**Office européen des brevets**

(11) Numéro de publication: **0 320 554 B1**

# FASCICULE DE BREVET EUROPEEN

(45) Date de publication de fascicule du brevet: **24.06.92**   (51) Int. Cl.⁵: **B64D 1/16**, A62C 3/02

(21) Numéro de dépôt: **87402897.0**

(22) Date de dépôt: **17.12.87**

(54) **Dispositif en vue de la lutte contre les incendies notamment de forêt à partir de moyens aériens.**

(43) Date de publication de la demande:
**21.06.89 Bulletin 89/25**

(45) Mention de la délivrance du brevet:
**24.06.92 Bulletin 92/26**

(84) Etats contractants désignés:
**ES FR GR IT**

(56) Documents cités:
**DE-A- 2 518 918        FR-A- 2 045 230**
**FR-A- 2 226 190        FR-A- 2 486 421**
**FR-A- 2 600 620        US-A- 3 068 179**

(73) Titulaire: **Moreau, André**
**10, rue des Dentellières**
**F-78640 St. Germain-de-la-Grange(FR)**

(72) Inventeur: **Moreau, André**
**10, rue des Dentellières**
**F-78640 St. Germain-de-la-Grange(FR)**

(74) Mandataire: **Wagret, Jean-Michel et al**
**CABINET WAGRET 23, rue de Léningrad**
**F-75008 Paris(FR)**

Rank Xerox (UK) Business Services

# Description

La présente invention concerne un dispositif permettant de lutter dans des conditions d'efficacité ponctuelles accrues contre les incendies notamment de zones boisées.

Les incendies de forêt qui affectent généralement des zones d'accès difficile sont combattues par des moyens terrestres et des moyens aériens.

Chacun possède ses avantages et sa spécificité.

Les moyens terrestres permettent une action ponctuelle et durable mais elle est cependant d'une efficacité limitée par les difficultés d'approvisionnement en eau comme par les difficultés de déplacement des engins et du personnel sur le terrain.

Les moyens aériens présentent l'avantage d'être beaucoup moins handicapés par les problèmes d'accessibilité.

Il reste cependant que les moyens aériens actuellement mis en action notamment les aéronefs du type Canadair, Tracker ou DC6 aménagé spécialement, restent d'une mise en oeuvre longue et se heurtant également à des contraintes.

Ainsi ces avions sont d'une vitesse relativement lente et pour peu que le point d'approvisionnement en eau soit éloigné du foyer, le temps de rotation entre deux déversements successifs est prolongé de sorte que le débit global dans le temps est limité, risquant par conséquent une reprise de l'incendie notamment dans des conditions de temps très ventées qui correspondent aux risques maximum de propagation.

En outre ces avions ne peuvent intervenir de nuit et connaissent également des contraintes d'accessibilité dans des zones boisées montagneuses et comportant des vallées encaissées.

Enfin dans le cas où le ravitaillement en eau doit se faire par écopage, la possibilité d'intervention est alors subordonnée à l'état de la mer qui dès la formation des vagues même modérée interdit cette opération.

On voit que le mise en oeuvre de moyens aériens si elle présente des avantages incontestables, reste cependant actuellement limitée.

On connaît par le brevet français publié 2 045 230 une charge de lutte contre les incendies portée par aéronef et contenant une réserve d'eau répandue lors de l'impact avec le sol provoquant la rupture de l'enveloppe.

On connaît également par le brevet français publié 2 486 421 une charge répondant aux mêmes fins et dans laquelle la réserve d'eau est pulvérisée dans l'environnement du point d'impact par un gicleur.

La présente invention vise à développer considérablement les possibilités d'intervention et de lutte contre les incendies notamment les incendies affectant les terrains boisés éloignés et/ou situés dans des régions difficilement accessibles, par la mise en oeuvre de moyens aériens dans des conditions considérablement perfectionnées et accrues en efficacité et en rapidité.

A cet effet l'invention concerne une charge pour la lutte contre les incendies à partir d'un moyen de transport aérien, notamment un chasseur bombardier,
ladite charge utilisant les moyens de suspension conventionnelle et étant constituée d'une enveloppe en matériau rigide, contenant intérieurement un produit extincteur disposé dans une poche en matériau souple et étanche, le produit extincteur notamment sous forme liquide, étant susceptible d'être évacué par une ouverture constituée par la section arrière du corps cylindrique de l'enveloppe, refermée par un disque d'obturation amovible (17), et la charge est caractérisée par la combinaison des moyens suivants :

a) Le disque d'obturation (17) est maintenu en place par des moyens de solidarisation permettant le dégagement du disque après une période de retard prédéterminée suivant le largage de la charge.

b) Le disque arrière (17) est lié à des moyens formant parachute (18) qui sont repliés en position d'attente et qui sont aptes à être mis en position déployée par des organes de commande (19) à retard programmé après le largage de la charge, l'ouverture du parachute (18) provoquant, par une forte traction sur le disque (17), l'arrachement de ce dernier en libérant l'ouverture arrière pour l'évacuation du produit.

c) Ce disque arrière (17) est relié par une liaison souple tel qu'un lien (20) à un opercule (15) situé à la partie avant de l'enveloppe, cet opercule étant séparable du reste de l'enveloppe par une ligne de faiblesse et de fragilisation, le diamètre intérieur de cet opercule étant inférieur au diamètre intérieur du corps de l'enveloppe, en permettant ainsi le passage de cet opercule à l'intérieur de la section de l'enveloppe.

d) Et cet opercule est apte à être repoussé vers l'arrière par traction depuis le disque arrière (17) lui-même tiré par le parachute (18), de sorte que l'air s'engouffrant sous l'effet de la vitesse et pénétrant à l'intérieur de l'enveloppe formant la charge, provoque le déplacement de la poche souple (14) provoquant, à son tour, l'évacuation forcée du produit d'extinction chassé vers l'ouverture arrière.

Selon une forme plus particulière de réalisation le "parachute" est constitué par un volet annulaire, solidaire du disque arrière et dont les pans rabattables sont maintenus en position d'attente contre le corps de l'enveloppe au moyen d'un anneau périphérique de solidarisation, cet anneau étant apte à être dégagé par un moyen de commande à action retard programmé, après une période de temps déterminée suivant le largage de la charge.

De préférence l'enveloppe comportera une platine métallique intégrée dans le matériau constituant ladite enveloppe et apte à recevoir des anneaux d'accrochage permettant l'accrochage de la charge sur les pylônes éjecteurs des avions.

La description qui suit montre un exemple plus particulier de réalisation d'une enveloppe selon l'invention et cet exemple correspond à une charge explosive emportée par les chasseurs bombardiers du type "freiné".

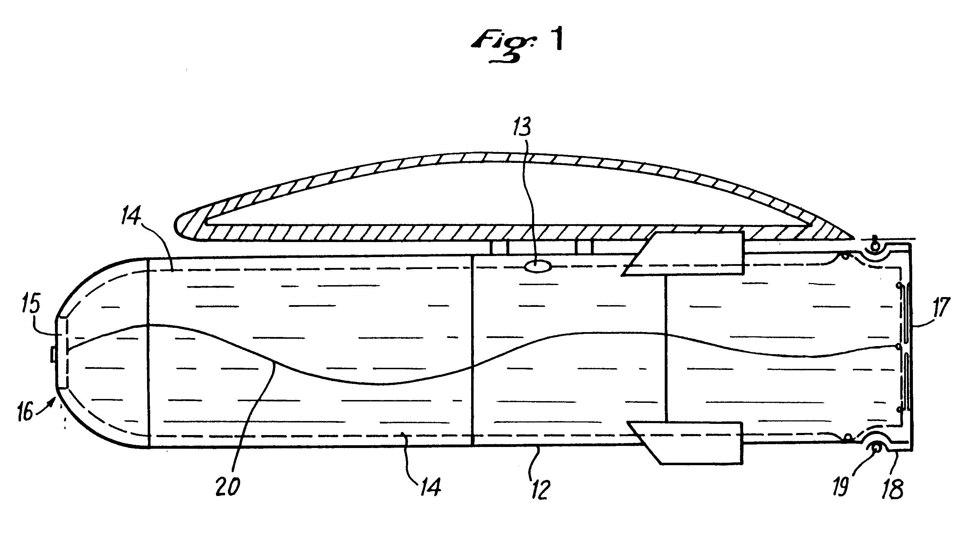

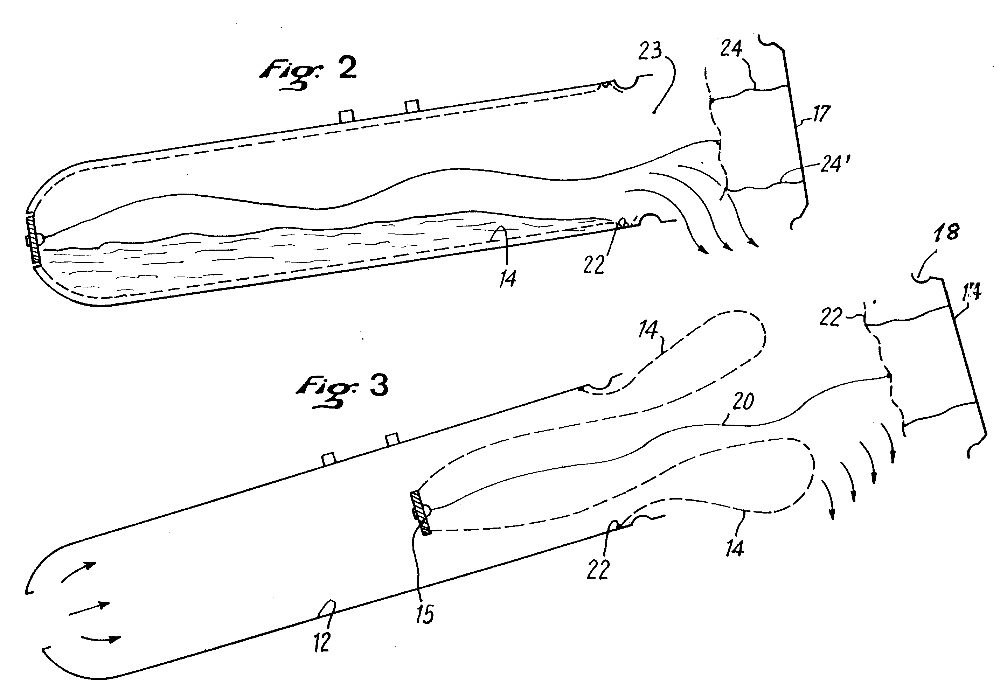

Les figures 1, 2 et 3 représentent une charge du type freiné selon l'invention.

La charge est largable à partir d'avions militaires équipés d'un système de visée d'attaque au sol et de pylônes éjecteurs par exemple NATO 30 pouces, destinée à répandre un produit extincteur contenu dans une enveloppe incombustible de préférence non métallique, d'épaisseur inférieure à 2 cms, éventuellement réalisée en matériau biodégradable, la charge est munie d'un empennage stabilisateur et d'un corps central cylindrique renforcé à la partie supérieure par une platine métallique intégrée dans le matériau constituant l'enveloppe de la charge, comportant deux anneaux d'accrochage au standard NATO classe 2000 1b de la charge pour emport sous les pylônes de l'avion porteur.

Conformément à la présente invention le corps central cylindrique est muni à la partie supérieure d'un orifice de remplissage et d'un obturateur, d'un orifice de trop plein et d'un obturateur.

La liaison mécanique avec le pylône de l'avion est uniquement constituée par l'interface d'accrochage; il n'est pas besoin de relier la charge au bloc de sécurité largable du pylône.

Le produit extincteur est introduit lors du remplissage par un orifice d'emplissage 13 situé sur la génératrice supérieure à l'arrière du corps dans une poche souple 14 épousant la forme intérieure de l'enveloppe 12 constituant le corps de la charge.

Cette poche souple 14 est solidaire d'un opercule 15 obturant la pointe hémisphérique 16 de l'enveloppe et cet opercule est relié par l'intérieur de la poche à la partie arrière du corps de la charge formé d'un disque 17 d'obturation, au moyen du lien 20.

Cette partie arrière est obturée par un disque 17.

Le disque 17 est, par ailleurs, rendu solidaire de volets annulaires parachute 18 maintenus en position d'attente par un jonc annulaire 19 sur la partie externe du corps de l'enveloppe 12.

De préférence le disque est indépendant de l'enveloppe et il est maintenu en place et en position d'obturation de l'arrière de l'enveloppe par les volets rabattus, formant calotte parachute lorsqu'ils sont déployés.

L'ouverture du parachute est commandée par un fil d'armement métallique monobrin dont la traction est initiée par une minuterie mécanique déclenchée au moment du largage de la charge par un doigt de présence ou par liaison au bloc de sécurité largable du pylône.

La charge emportée peut être larguée en mode actif, inerte, secours ou détresse, en coup par coup ou en salve, en vol horizontal ou en léger piqué. Dans ce cas, la charge se comporte comme une bombe freinée dont elle aura les caractéristiques balistiques essentielles en vue d'utiliser directement les possibilités de l'avion tireur c'est-à-dire sans modificaion des paramètres "Bombe freinée" programmés dans le viseur. Un réglage judicieux de la minuterie permettra de réaliser cet objectif.

Le cercle d'erreur probable sera équivalent à celui d'une bombe freinée.

La charge est larguée depuis le pylône de l'avion. La minuterie mécanique est initiée par un doigt de présence ou la traction d'un fil de sécurité largable relié au bloc d'armement.

Au largage de la charge, la minuterie, préalablement programmée, est initiée par le mouvement du doigt de présence ou par la traction du fil de sécurité largable relié au bloc de sécurité largable du pylône.

La charge suit une trajectoire balistique jusqu'au moment où la minuterie déclenche la traction d'un fil d'armement monobrin relié aux volets parachute. Le fil d'armement libère le jonc 19 qui maintient en place les volets parachute 18.

Sous l'action du vent relatif, les volets parachute 18 freinent par rapport à la charge, qui poursuit sa trajectoire balistique, et tend les câbles 24 la reliant à la partie arrière fragilisée de la poche 14 qui se déchire, libérant une partie du produit extincteur.

Le câble 20 est tendu à son tour, libérant l'opercule 15 situé à l'ogive 16 et l'entraînant vers l'arrière. Sous la double action du freinage des volets parachute 18 et de la pression dynamique qui s'exerce sur l'opercule 15, la poche 14 se retourne littéralement vers l'arrière, libérant le restant du produit extincteur contenu dans la charge, au-dessus du foyer visé.

La charge vidée de son contenu opérationnel poursuit une trajectoire freinée sans danger pour les forces d'intervention terrestre qui pourraient être dans le voisinage.

La sécurité d'emport de la charge type freinée est assurée par le fil d'armement verrouillant le jonc de la calotte parachute. Si pour une raison quelconque la calotte venait à s'ouvrir lors d'un vol d'emport, la charge se viderait du produit extincteur et l'enveloppe interne serait déchirée par la pression dynamique et le freinage de la calotte parachute sans dommage pour l'avion porteur.

En utilisation opérationnelle, la charge selon l'invention n'a pas pour but de vouloir se substituer aux moyens aériens de lutte contre les incendies déjà existants : DC 6, TRACKER, etc... et, principalement, CANADAIR CL 215.

L'objectif est par contre de pouvoir compléter, efficacement, le rôle de ces appareils. L'emploi d'aéronefs modernes, performants, permettra d'attaquer les incendies de forêts :
    . Avec précision (utilisation du viseur de combat),
    . Avec rapidité (possibilité d'intervention dès le début de l'incendie),
    . De nuit comme de jour (les moyens aériens actuels étant limités aux heures diurnes),
    . Quelles que soient les conditions météorologiques (alors qu'un CANADAIR ne peut plus écoper en mer dès que le vent engendre une mer de force 2).

Ce type de missions pourrait être affecté à l'entraînement des pilotes au bombardement.

La répartition des bases aériennes concernées permet d'envisager une intervention efficace possible dans les régions "sensibles" notamment les régions méditerranéennes. Pour un largage en mode détresse, il conviendra de larguer la charge en mode actif. Le produit extincteur sera alors libéré à la phase freinée et l'enveloppe vide suivra une trajectoire freinée par la calotte parachute et le disque arrière jusqu'au sol avec une vitesse relativement basse.

Le problème ne se pose pas si la minuterie de la charge est commandée par un doigt de présence: tout largage entraînera le fonctionnement de la minuterie donc l'ouverture du parachute et l'épandage du produit extincteur.

**Revendications**

1.  Charge pour la lutte contre les incendies à partir d'un moyen de transport aérien, notamment un chasseur bombardier,
    ladite charge utilisant les moyens de suspension conventionnelle et étant constituée d'une enveloppe en matériau rigide, contenant intérieurement un produit extincteur disposé dans une poche en matériau souple et étanche, le produit extincteur notamment sous forme liquide, étant susceptible d'être évacué par une ouverture constituée par la section arrière du corps cylindrique de l'enveloppe, refermée par un disque d'obturation amovible (17),
    et la charge est caractérisée par la combinaison des moyens suivants :

    a) Le disque d'obturation (17) est maintenu en place par des moyens de solidarisation permettant le dégagement du disque après une période de retard prédéterminée suivant le largage de la charge.
    b) Le disque arrière (17) est lié à des moyens formant parachute (18) qui sont repliés en position d'attente et qui sont aptes à être mis en position déployée par des organes de commande (19) à retard programmé après le largage de la charge, l'ouverture du parachute (18) provoquant, par une forte traction sur le disque (17), l'arrachement de ce dernier en libérant l'ouverture arrière pour l'évacuation du produit.
    c) Ce disque arrière (17) est relié par une liaison souple tel qu'un lien (20) à un opercule (15) situé à la partie avant de l'enveloppe, cet opercule étant séparable du reste de l'enveloppe par une ligne de faiblesse et de fragilisation, le diamètre intérieur de cet opercule étant inférieur au diamètre intérieur du corps de l'enveloppe, en permettant ainsi le passage de cet opercule à l'intérieur de la section de l'enveloppe.
    d) Et cet opercule est apte à être repoussé vers l'arrière par traction depuis le disque arrière (17) lui-même tiré par le parachute (18), de sorte que l'air s'engouffrant sous l'effet de la vitesse et pénétrant à l'intérieur de l'enveloppe formant la charge, provoque le déplacement de la poche souple (14) provoquant, à son tour, l'évacuation forcée du produit d'extinction chassé vers l'ouverture arrière.

2.  Charge selon la revendication 1,
    caractérisée en ce que ledit parachute est constitué par des volets annulaires (18) solidaires du disque arrière (17) et dont les pans rabattables sont maintenus en position d'attente contre le corps de l'enveloppe au moyen d'un anneau périphérique (19) de solidarisation, cet anneau étant apte à être dégagé par un moyen de commande à action retard programmé après une période de temps déterminée suivant le largage de la charge.

3.  Charge selon l'une des revendications 1 ou 2 ci-dessus
    caractérisée en ce que l'enveloppe comporte une platine métallique intégrée dans le matériau constituant ladite enveloppe et apte à recevoir des anneaux d'accrochage permettant la suspension de la charge sous les pylônes éjecteurs des avions.

**Claims**

1. Charge for fighting fires from an air transport means, particularly a fighter-bomber, said charge using conventional suspension means and being constituted by an envelope of rigid material, internally containing an extinguishing product disposed in a bag of supple, tight material, the extinguishing product, particularly in liquid form, being capable of being evacuated through an opening constituted by the rear section of the cylindrical body of the envelope, closed by a removable obturation disc 17, and the charge is characterized by the combination of the following means:

a) the obturation disc 17 is maintained in place by connecting means allowing the disc to be disengaged after a predetermined delay period following jettison of the charge;

b) the rear disc 17 is connected to means forming parachute 18 which are folded in standby position and which are adapted to be placed in unfolded position by control members 19 with programmed delay after jettison of the charge, opening of the parachute 18 provoking, by a considerable pull on the disc 17, tearing of the latter, releasing the rear opening for evacuation of the product;

c) this rear disc 17 is connected, by a supple connection such as a tie 20, to a cap 15 located in the front part of the envelope, this cap being adapted to be separated from the rest of the envelope by a line of weakness and fragilization, the inner diameter of this cap being less than the inner diameter of the body of the envelope, thus allowing this cap to pass inside the section of the envelope;

d) and this cap is adapted to be pushed rearwardly by traction from the rear disc 17 itself drawn by the parachute 18, with the result that the air, sweeping in under the effect of the speed and penetrating inside the envelope forming the charge, provokes displacement of the supple bag 14, in turn provoking the forced evacuation of the extinguishing product driven towards the rear opening.

2. Charge according to Claim 1, characterized in that said parachute is constituted by annular flaps 18 fast with the rear disc 17 and whose foldable panels are maintained in standby position against the body of the envelope by means of a peripheral ring 19 for connection, this ring being adapted to be disengaged by a control means with programmed delay action after a determined period of time following jettison of the charge.

3. Charge according to one of Claims 1 or 2 herein-above, characterized in that the envelope comprises a metal plate integrated in the material constituting said envelope and adapted to receive hooking rings allowing suspension of the charge beneath the ejector pylons of the aircraft.

**Patentansprüche**

1. Löschgerät zur Waldbrandbekämpfung mittels eines Luftfahrzeugs wie Jagdbomber, wobei konventionelle Aufhängemittel verwendet werden, und das Löschgerät aus einem Gehäuse aus steifem Material besteht, das innen in einer aus weichem und wasserundurchlässigem Material bestehenden Hülle ein Löschmittel enthält, wobei das Löschmittel flüssig ist und aus einer aus dem hinteren zylindrischen Teil des Gehäuses gebildeten Öffnung austreten kann, die durch eine unbewegliche Verschlußscheibe (17) abgedichtet werden kann, und das Löschgerät durch die Kombination folgender Merkmale gekennzeichnet ist:

a) Die Verschlußscheibe (17) wird durch Verbindungsmittel festgehalten, die das Lösen der Scheibe nach einer vorbestimmten Verzögerungszeit je nach Größe des Löschgeräts erlauben,

b) Die hintere Scheibe (17) ist mit einer nach Art eines Fallschirms ausgebildeten Vorrichtung (18) verbunden, die in der Ausgangsposition gefaltet ist und durch Befehlsorgane (19) nach einer je nach Größe des Löschgeräts programmierten Verzögerung entfaltet werden kann, wobei eine auf die Scheibe (17) wirkende starke Zugkraft das Öffnen des Fallschirms (18) bewirkt und die Scheibe verschiebt, wodurch die hintere Öffnung freigemacht wird und das Löschmittel ausfließen kann.

c) Die hintere Scheibe (17) ist durch ein weiches Verbindungsmittel, wie ein Band (20), mit einem sich im vorderen Teil des Gehäuses befindlichen Deckel (15) verbunden, der vom Rest des Gehäuses durch eine Schwächungslinie trennbar ist, wobei der innere Durchmesser dieses Deckels kleiner ist als der innere Durchmesser des Gehäusekörpers, wodurch der Deckel in das Innere des Gehäuseabschnitts bewegt werden kann.

d) Der Deckel kann durch eine Zugkraft von der vorderen Scheibe (17), die selbst von dem Fallschirm (18) gezogen wird, nach hinten gestoßen werden, so daß die sich unter der Geschwindigkeitswirkung verfangene und in das Innere des das Löschgerät bildenden Gehäuses eindringende Luft die Verschiebung der weichen Hülle (14) bewirkt, die ihrerseits das Ausfließen des Löschmittels durch die vordere Öffnung erzwingt.

2.  Löschgerät nach Anspruch 1,
    dadurch gekennzeichnet, daß der Fallschirm aus mit der vorderen Scheibe (17) verbundenen Ringflügeln (18) besteht, deren herunterklappbare Seitenwände in einer Ausgangsposition durch einen peripheren Ring (19) gegen den Gehäusekörper festgehalten werden, wobei dieser Ring durch einen programmierbaren Befehl nach einer festgelegten Zeitverzögerung je nach Größe des Löschgeräts gelöst werden kann.

3.  Löschgerät nach einem der Ansprüche 1 oder 2
    dadurch gekennzeichnet, daß das Gehäuse eine metallische Platine enthält, die in das das Gehäuse bildende Material integriert ist und mit Aufhängeringen gekoppelt werden kann, und das Lösen des Löschgeräts unter der Abschußbrücke der Flugzeuge ermöglicht.

*Fig. 1*

EP 0 320 554 B1

Fig. 2

Fig. 3